# EUROPÄISCHE PATENTSCHRIFT

(11) **EP 1 495 666 B1**
(45) Veröffentlichungstag und Bekanntmachung des Hinweises auf die Patenterteilung: **10.06.2009**
(21) Anmeldenummer: 04015477.5
(22) Anmeldetag: 01.07.2004
(51) Int. Cl.: A01D 78/10, A01B 73/06

(54) **Heuwerbungsmaschine**
Haymaking machine
Machine de fenaison

(30) Priorität: 04.07.2003 DE 10330383
(43) Veröffentlichungstag der Anmeldung: 12.01.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 0 346 701
- EP-A- 0 772 968
- EP-A- 0 812 531
- FR-A- 2 748 188

## Beschreibung

Die Erfindung bezieht sich auf eine Heuwerbungsmaschine, insbesondere zum Zetten und Wenden von Halmgut, mit an Maschinenbalken angeordneten und über Stützräder auf dem Boden abstützbaren Arbeitskreiseln sowie Maschinenbalken in Arbeitsfahrtrichtung vorgeordneten Rahmenteilen, wobei seitlich neben einem zentralen Maschinenbalken vorgesehene Maschinenbalken mit ihren zugeordneten Rahmenteilen aus einer sich in etwa quer zur Arbeitsfahrtrichtung erstreckenden Arbeitsstellung in eine in etwa parallel zur Arbeitsfahrtrichtung verschwenkte Transportstellung überführbar sind.

Eine Heuwerbungsmaschine der vorgenannten Art ist aus DE 296 10 307 U1 bekannt. Bei dieser Heuwerbungsmaschine mit großer Arbeitsbreite sind die beiden seitlich neben einem Zentralbalken um eine senkrechte Achse verschwenkbaren, die Arbeitskreisel tragenden Maschinenbalken jeweils mit Schutzrahmen versehen, die sich jeweils bis zum vorderen Ende des jeweiligen seitlichen Maschinenbalkens erstrecken und über Endstützen und über Querträger an dem jeweils zugeordneten Maschinenbalken abgestützt sind. Um in der Arbeitsstellung dieser seitlichen Maschinenbalken die jeweiligen Maschinenbalken zu stabilisieren, sind neben den normalen Verbindungsteilen zum landwirtschaftlichen Schlepper hin besondere Zugstreben mit dem jeweiligen seitlichen Maschinenbalken verbunden, die bis in den Bereich eines zweiten Arbeitskreisels reichen. Der mit den zusätzlichen Zugstreben einhergehende bauliche Aufwand ist nicht unerheblich. In der Praxis können jedoch derartige Zugstreben bei großen Arbeitsbreite der Maschine die Heuwerbungsmaschine in ihrer Arbeitsstellung der Teile nicht hinreichend stabilisieren.

Es ist Aufgabe der vorliegenden Erfindung, eine Heuwerbungsmaschine für große Arbeitsbreiten mit verbesserten Stabilitätseigenschaften in der Arbeitsstellung zu schaffen.

Zur Lösung dieser Aufgabe zeichnet sich die Heuwerbungsmaschine der eingangs genannten Art dadurch aus, daß die Rahmenteile der in Arbeitsstellung überführten seitlichen Maschinenbalken zusammen mit einem dem zentralen Maschinenbalken zugeordneten Rahmenteil oder einem Rahmenteilbereich der Rahmenteile der seitlichen Maschinenbalken als durchgehendes Zugstangenelement mit zumindest einer Trennstelle ausgebildet sind.
Die Heuwerbungsmaschine weist bevorzugt eine erhöhte Anzahl von Arbeitskreiseln mit jeweils geringerem Kreiseldurchmesser auf. Hierdurch sind pro Kreisel geringere Mengen von Halmgut zu verarbeiten, wodurch sich die Qualität insbesondere auch von zu Futtermittel zu verarbeitendem Halmgut verbessern lässt. Durch den geringen Kreiseldurchmesser ist darüber hinaus der Streuwinkel positiv beeinflusst und die Menge nicht aufgenommenen Halmguts deutlich verringert. Solche kleineren Arbeitskreiseldurchmesser lassen sich besonders gut realisieren, wenn die Lage der vertikalen Schwenkachsen der beiden seitlichen Maschinenbalken so gewählt ist, dass sich das Abstandsmaß A zwischen den inneren Arbeitskreiseln in der Arbeitsstellung bei der Überführung der seitlichen Maschinenbalken in die Transportstellung vergrößert.

Damit ist eine Heuwerbungsmaschine zur Verfügung gestellt, die auch bei sehr großer Arbeitsbreite, z. B. in einer Ausrüstung mit acht, zehn, zwölf oder mehr Arbeitskreiseln, durch die das durchgehende Zugstangenelement ausbildenden Rahmenteile eine derartige Stabilisierung für die Maschinenbalken aufweist, daß auch bei Auftreffen auf Hindernisse, wie beispielsweise Bodenwellen, eine unbeeinträchtigte Arbeitsfahrt durchgeführt werden kann. Gleichwohl ist über die zumindest eine Trennstelle - bevorzugtermassen sind zwei Trennstellen vorhanden - eine Verschwenkung von seitlichen Maschinenbalken in eine gezogene, im wesentlichen fahrtrichtungsparallele Transportstellung möglich. Dabei bleibt bevorzugterweise das Rahmenteil des zentralen Maschinenbalkens in seiner Position, so daß nach Zurückverschwenken von seitlichen Maschinenbalken die diesen zugeordneten Rahmenteile der seitlichen Maschinenbalken in der Arbeitsstellung sicher mit dem Rahmenteil des zentralen Maschinenbalkens zu dem durchgehenden Zugstangenelement verbunden werden können.

Bevorzugtermassen sind die Rahmenteile nach Art eines Fachwerks aufgebaut und haben zunächst vordere, sich im wesentlichen parallel zu den seitlichen Maschinenbalken erstreckende durchgehende Streben. Diese sind über Querstreben an dem jeweiligen Maschinenbalken abgestützt. Ist der Maschinenbalken in Einzelmaschinen-Balkenteile durch im wesentlichen horizontale Schwenkachsen unterteilt, so ist vorzugsweise pro Einzelmaschinenbalken eine Querstrebe vorgesehen. Zwecks weiterer Stabilisierung des jeweiligen Rahmenteiles kann dann an mehreren Stellen, d. h. an einem oder mehreren Paar(en) von benachbart vorgesehenen Querstreben eine Verbindung geschaffen werden, beispielsweise in Gestalt einer Diagonalstrebe. Alternativ kann jedoch im Feld zwischen zwei benachbarten Querstreben auch durch ein plattenförmiges Aussteifungselement, durch sich kreuzende Stahlseile oder dgl. Stabilisierungselemente ausgesteift werden. Auf alle Fälle ist sicherzustellen, daß in der Arbeitsfahrt den jeweiligen Maschinenbalken ein durchgehendes Zugstangenelement zugeordnet ist, das sich durchgehend von dem einen Ende eines seitlichen Maschinenbalken zu dem anderen äußeren Ende des anderen seitlichen Maschinenbalkens erstreckt, so daß auch im Zentralbereich Kräfte aufgenommen werden können, die im vorbekannten Stand der Technik von seitlichen Maschinenbalken aufzunehmen sind.

Weitere Einzelheiten und Vorteile der Erfindung ergeben sich aus weiteren Unteransprüchen, der nachfolgenden Beschreibung und der Zeichnung. In der Zeichnung zeigen:
- Figur 1:: Eine Draufsicht auf ein Ausführungsbeispiel einer Heuwerbungsmaschine nach der Erfindung in Arbeitsstellung,

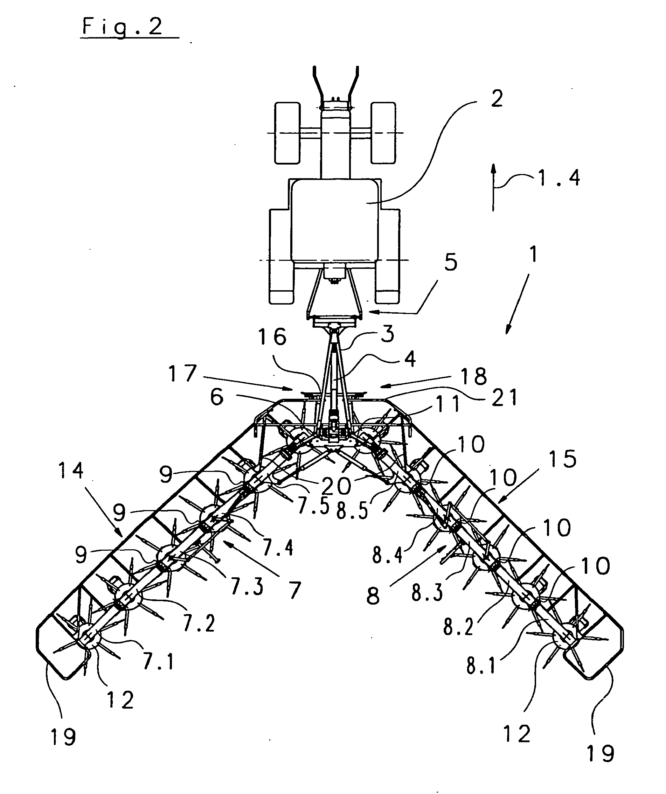

- Figur 2:: eine Draufsicht auf das Ausführungsbeispiel nach Figur 1 während der Überführung von seitlichen Maschinenbalken in die Transportstellung,
- Figur 3:: eine Draufsicht auf das Ausführungsbeispiel nach den Figuren 1 und 2 in der Transportstellung der Maschine,
- Figur 4:: eine perspektivische Darstellung des Ausführungsbeispiels nach Figur 1 in einer Arbeitsstellung der seitlichen Maschinenbalken, die sich quer zur Fahrtrichtung erstrecken, und
- Figur 5:: eine perspektivische Teilansicht auf in Transportstellung verschwenkte seitliche Maschinenbalken in vergrößerter Darstellung.

In der Zeichnung sind grundsätzlich gleichwirkende Teile mit übereinstimmenden Bezugsziffern bezeichnet. Allgemein mit 1 ist in der Zeichnung die Heuwerbungsmaschine zum Zetten und Wenden von Halmgut beziffert, die in dem dargestellten Ausführungsbeispiel von einem landwirtschaftlichen Schlepper 2 gezogen und dort über eine Deichseleinrichtung 3 sowie eine Gelenkwelle 4 mit den üblichen Koppelpunkten 5 des Schleppers 2 verbunden ist.

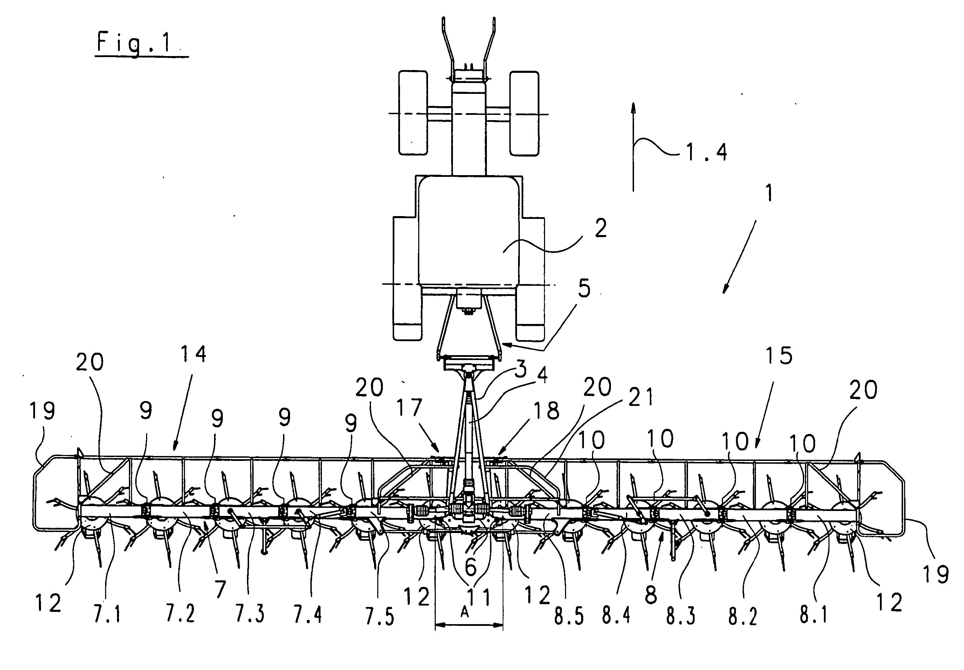

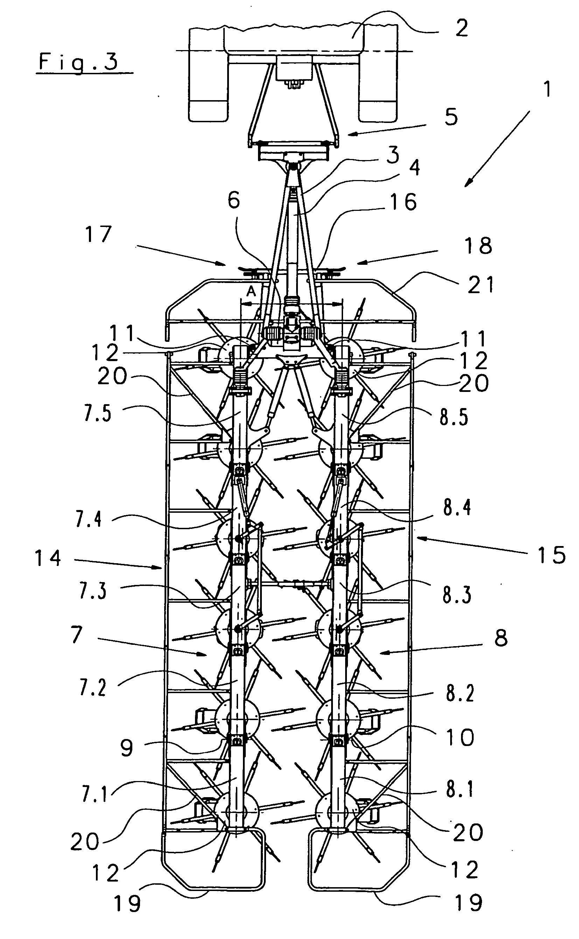

Die Heuwerbungsmaschine 1 hat einen zentralen mittleren Maschinenbalken 6 sowie links und recht von diesem allgemein mit 7 und 8 bezifferte seitliche Maschinenbalken, die in Einzelmaschinenbalken 7.1, 7.2, 7.3, 7.4 und 7.5 bzw. 8.1, 8.2, 8.3, 8.4 sowie 8.5 aufgeteilt sind und zwischen benachbarten Einzelbalken jeweils im wesentlichen horizontal ausgerichtete Schwenkachsen 9 bzw. 10 haben. Über bei 11 gelegene Schwenkachsen, die im wesentlichen vertikal ausgerichtet sind, sind die seitlichen Maschinenbalken in ihre, aus der Figur 3 ersichtliche Transportstellung zu überführen. Das Abstandsmaß A zwischen den Vertikalmittelachsen der beiden in Arbeitsstellung inneren Arbeitskreisel 12 (Fig.1) ist in der Transportstellung (Fig. 3) vergrößert.

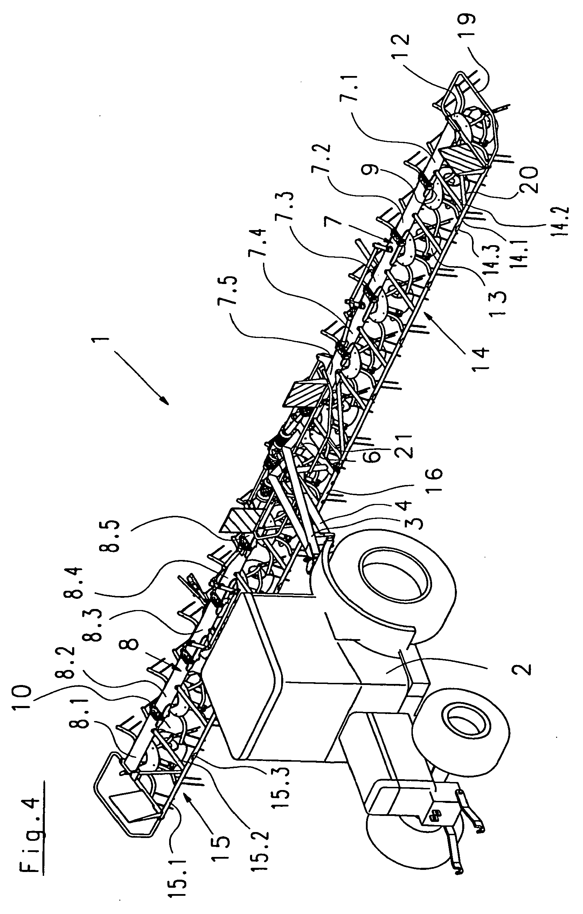

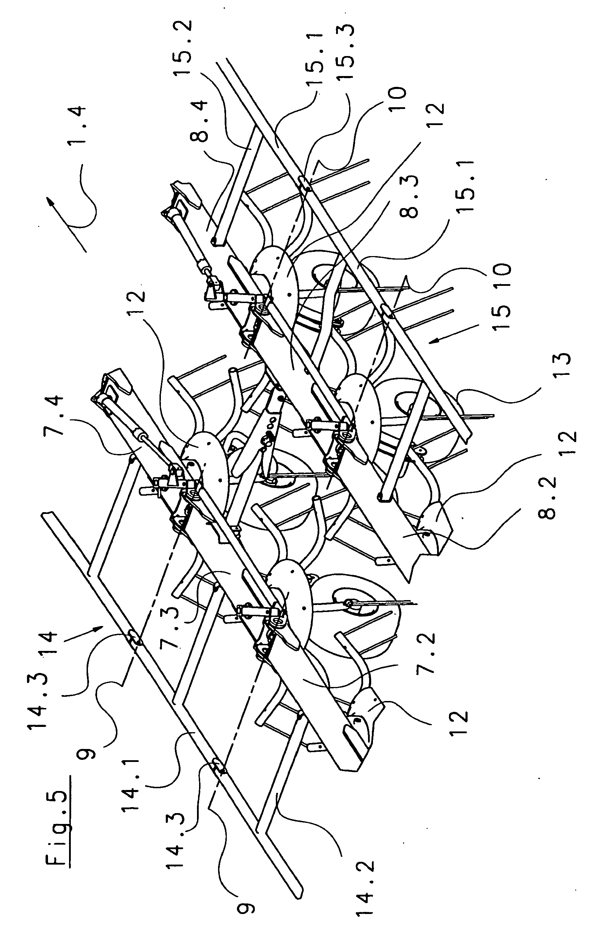

An den seitlichen Maschinenbalken 7 und 8 sind sämtliche Arbeitskreisel 12 der Maschine abgestützt. Über Laufräder 13 (siehe auch Figur 4) sind die Maschinenbalken 7, 8 mit den Arbeitskreiseln 12 auf dem Erdboden abstützbar. In Arbeitsfahrtrichtung 1.4 sind sämtlichen Maschinenbalken 6, 7 und 8 Rahmenteile vorgeordnet, und zwar dem Maschinenbalken 7 ein Rahmenteil 14, dem Maschinenbalken 8 ein Rahmenteil 15 und dem zentralen Maschinenbalken 6 ein Rahmenteil 16. Über Trennstellen 17 und 18 sind diese seitlichen Rahmenteile 14 und 15 mit dem zentralen Rahmenteil 16 zu verbinden und von diesem wieder zu trennen, so daß die seitlichen Rahmenteile 14 und 15, aus der in Fig. 1 dargestellten Arbeitsstellung in die aus Figur 3 ersichtliche Transportstellung zu bringen sind. An den jeweiligen äußeren Endbereichen der Maschinenbalken 7 und 8 sind noch die Arbeitskreisel 12 übergreifende Rahmenseitenenden 19 vorgesehen. Wie im einzelnen auch näher aus Figur 5 hervorgeht, haben die Rahmenteile 14 bzw. 15 eine vordere durchgehende Längsstrebe 14.1 bzw. 15.1, die über Querstreben 14.2, 15.2 mit dem jeweiligen seitlichen Maschinenbalken 7 bzw. 8 verbunden sind. Die vorderen Streben 14.1 bzw. 15.1 haben auch jeweils gelenkige Verbindungen 14.3, 15.3, die sich koaxial zu den Gelenken am Maschinenbalken 7 bzw. 8 erstrecken und mithin übereinstimmende Schwenkachsen 9 bzw. 10 haben. Damit können die vorderen Rahmenstreben 14.1, 15.1 Höhenausgleichsbewegungen der einzelnen Einzelmaschinenbalken 7.1 bis 7.5 bzw. 8.1 bis 8.5 folgen.

Im mittleren Zentralbereich, also dem Maschinenbalken 6 vorgeordnet, ist ein feststehendes Rahmenteil 16 mit seitlichen Trennstellen 17 bzw. 18 vorgesehen, an denen eine Verriegelungseinheit zur Aufnahme der seitlichen Rahmenteile 14 und 15 in der in der Figur 1 und der Figur 4 dargestellten Arbeitsstellung der Teile vorgesehen ist. Über diese Trennstellen bzw. die Verriegelungseinheiten sind die seitlichen Rahmenteile 14 und 15 derart an den mittleren zentralen Rahmenteilbereich anzukoppeln, daß dadurch in der Arbeitsstellung der Teile ein durchgehendes, fest miteinander verbundenes Zugstangenelement dargestellt wird, das der Heuwerbungsmaschine während der Arbeitsfahrt auch bei sehr großer Arbeitsbreite mit z. B. zwölf Arbeitskreiseln die notwendige Arbeitsfahrtstabilität verleiht. In einigen der durch die Querstreben 14.2 bzw. 15.2 zusammen mit den vorderen Streben 14.1 bzw. 15.1 gebildeten Feldern sind noch besondere Stabilisierungsmaßnahmen vorgesehen, indem benachbarte Querstreben 15.2 bzw. 14.2 durch Stabilisierungselemente 20 miteinander verbunden sind. Im skizzierten Ausführungsbeispiel ist den jeweils inneren Einzelmaschinenbalken 7.5 bzw. 8.5 und den jeweils außen liegenden äußeren Einzelmaschinenbalken 7.1 bzw. 8.1 ein derartiges Stabilisierungselement 20 zugeordnet, und zwar in dem dargestellten Ausführungsbeispiel als Diagonalstrebe, so daß insgesamt eine Fachwerkausbildung bei den jeweiligen seitlichen Rahmenteilen 14 bzw. 15 vorliegt. Anstelle der Diagonalstrebe können auch sonstige Stabilisierungselemente wie plattenförmige Elemente, einander kreuzende Stützen, Stahlseile oder dgl. vorgesehen sein, um sicher auftretende Kräfte auf benachbarte Querstreben bzw. vordere Rahmenstreben zu übertragen. Es ist ebenfalls möglich, jedes Feld mit einem entsprechenden Stabilisierungselement im Bedarfsfall auszustatten.

Um in der Transportstellung auch nach vorne hin einen Schutzrahmen vorliegen zu haben, ist noch ein vorderer übergreifender Vorderrahmen 21 in Gestalt eines Korbes vorgesehen. Bei dem skizzierten Ausführungsbeispiel sind sämtliche Arbeitskreisel 12 an den seitlichen Maschinenbalken 7 bzw. 8 vorgesehen, so daß der vordere zentrale Maschinenbalken 6 keine Arbeitskreisel 12 trägt, sondern den zentralen mit den Trennstellen 17, 18 versehenen Zentralrahmen 16 aufweist. In dem beschriebenen Ausführungsbeispiel ist die Maschine mit insgesamt zwölf Arbeitskreiseln ausgestattet. Es ist jedoch auch eine andere Anzahl von Arbeitskreiseln möglich. Ebenfalls ist möglich, durch die enorm stabilisierende Wirkung der Rahmenteile als durchgehendes Zugstangenelement auch mehr als zwölf Arbeitskreisel vorzusehen.

## Patentansprüche

1. Heuwerbungsmaschine (1), insbesondere zum Zetten und Wenden von Halmgut, mit an Maschinenbalken (7, 8) angeordneten und über Stützräder (13) auf dem Boden abstützbaren Arbeitskreiseln (12) sowie Maschinenbalken (7, 8) in Arbeitsfahrtrichtung (1.4) vorgeordneten Rahmenteilen (14, 15), wobei seitlich neben einem zentralen Maschinenbalken (6) vorgesehene Maschinenbalken (7, 8) mit ihren zugeordneten Rahmenteilen (14, 15) aus einer sich in etwa quer zur Arbeitsfahrtrichtung (1.4) erstreckenden Arbeitsstellung in eine in etwa parallel zur Arbeitsfahrtrichtung (1.4) verschwenkte Transportstellung überführbar sind, **dadurch gekennzeichnet, daß** die Rahmenteile (14, 15) der in Arbeitsstellung überführten seitlichen Maschinenbalken (7, 8) zusammen mit einem dem zentralen Maschinenbalken zugeordneten Rahmenteil (16) oder einem Rahmenteilbereich der Rahmenteile (14, 15) als durchgehendes Zugstangenelement mit zumindest einer Trennstelle (17, 18) ausgebildet sind.

2. Heuwerbungsmaschine nach Anspruch 1, **dadurch gekennzeichnet, daß** das durch die Rahmenteile (14, 15) der seitlichen Maschinenbalken (7, 8) und dem Rahmenteil (16) des zentralen Maschinenbalkens (6) durchgehende Zugstangenelement mit zwei beidseits des zentralen Maschinenbalkens (6) gelegenen Trennstellen (17, 18) ausgebildet ist.

3. Heuwerbungsmaschine nach Anspruch 1 oder 2 mit Rahmenteilen (14, 15), die über Querträger (14.2, 15.2) an Maschinenbalken (7, 8) abgestützt sind, **dadurch gekennzeichnet, daß** ein oder mehrere Paar (e) benachbart angeordneter Querträger (14.2, 15.2) über Stabilisierungselemente (20) miteinander verbunden sind.

4. Heuwerbungsmaschine nach Anspruch 3, **dadurch gekennzeichnet, daß** ein Stabilisierungselement (20), als Diagonalstütze ausgebildet ist.

5. Heuwerbungsmaschine nach Anspruch 3, **dadurch gekennzeichnet, daß** ein Stabilisierungselement (20) durch einander kreuzende Stützen gebildet ist.

6. Heuwerbungsmaschine nach Anspruch 3, **dadurch gekennzeichnet, daß** ein Stabilisierungselement (20) durch ein plattenförmiges Element gebildet ist.

7. Heuwerbungsmaschine nach einem der Ansprüche 3 bis 5, **dadurch gekennzeichnet, daß** ein Stabilisierungselement (20) als verschweißbares Stahlelement ausgebildet ist.

8. Heuwerbungsmaschine nach einem der Ansprüche 3 bis 5, **dadurch gekennzeichnet, daß** ein Stabilisierungselement (20) durch ein Stahlseil gebildet ist.

9. Heuwerbungsmaschine nach einem der Ansprüche 1 bis 8, **dadurch gekennzeichnet, daß** ein Stabilisierungselement (20) jeweils am Ende eines seitlichen Maschinenbalken (7, 8) vorgesehen ist.

10. Heuwerbungsmaschine nach einem der Ansprüche 3 bis 9, **dadurch gekennzeichnet, daß** ein Stabilisierungselement (20) in einem dem zentralen Maschinenbalken (6) zugewandten Bereich der Rahmenteile (14, 15) eines seitlichen Maschinenbalkens (7, 8) vorgesehen ist.

11. Heuwerbungsmaschine nach einem der Ansprüche 1 bis 10, **dadurch gekennzeichnet, daß** das dem zentralen Maschinenbalken (6) zugeordnete Rahmenteil (16) als feststehendes Rahmenteil mit den Rahmenteilen (14, 15) der seitlichen Maschinenbalken (7, 8) zugeordneten Verriegelungselementen ausgebildet ist.

12. Heuwerbungsmaschine nach einem der Ansprüche 1 bis 11, **dadurch gekennzeichnet, daß** seitliche Maschinenbalken (7, 8) und zugeordnete Rahmenteile (14, 15) miteinander fluchtende Gelenkstellen mit in etwa horizontal ausgerichteten Schwenkachsen (9, 10) haben.

13. Heuwerbungsmaschine nach einem der Ansprüche 1 bis 12, **dadurch gekennzeichnet, daß** in der Transportstellung der seitlichen Maschinenbalken (7, 8) ein zentraler, in Arbeitsfahrtrichtung die vorderen Arbeitskreisel (12) übergreifender Schutzrahmen (21) vorgesehen ist, der sich in der Transportstellung der Rahmenteile (14, 15) der seitlichen Maschinenbalken (7, 8) bis nahe an diese erstreckt.

## Claims

1. Haymaking machines (1), particularly for spreading stalked crops, having working rotors (12) which are arranged on bars (7,8) of the machine and which can be supported on the ground by means of supporting wheels (13), and having frame members (14,15) which are positioned ahead of the bars (7,8) of the machine in the working direction of travel (1.4), bars (7,8) of the machine which are provided laterally next to a central bar (6) of the machine being able to be transferred, together with their associated frame members (14,15), from a working position in which they extend approximately at right angles to the working direction of travel (1.4) to a position for transport in which they are pivoted round approximately parallel to the working direction of travel (1.4), **characterised in that**, when the lateral bars (7,8) of the machine have been transferred to the working position, the frame members (14,15) thereof, together with a frame member (16) which is associated with the central bar of the machine or together with a region of the frame members (14,15), take the form of a continuous member, forming a traction bar, which has at least one division (17,18).

2. Haymaking machine according to claim 1, **characterised in that** the member, forming a traction bar, which is continuous across the frame members (14,15) of the lateral bars (7,8) of the machine and the frame member (16) of the central bar (6) of the machine is formed to have two divisions (17, 18) which are situated on either side of the central bar (6) of the machine.

3. Haymaking machine according to claim 1 or 2, having frame members (14, 15) which are supported on bars (7, 8) of the machine by means of cross-members (14.2, 15.2), **characterised in that** one or more pairs of cross-members (14.2, 15.2) arranged adjacent to one another are connected together by stabilising members (20).

4. Haymaking machine according to claim 3, **characterised in that** a stabilising member (20) is in the form of a diagonal strut.

5. Haymaking machine according to claim 3**, characterised in that** a stabilising member (20) is formed by intersecting struts.

6. Haymaking machine according to claim 3, **characterised in that** a stabilising member (20) is formed by a member in plate form.

7. Haymaking machine according to one of claims 3 to 5, **characterised in that** a stabilising member (20) is in the form of a weldable steel member.

8. Haymaking machine according to one of claims 3 to 5, **characterised in that** a stabilising member (20) is formed by a steel cable.

9. Haymaking machine according to one of claims 1 to 8, **characterised in that** a stabilising member (20) is provided at each end of a lateral bar (7, 8) of the machine.

10. Haymaking machine according to one of claims 3 to 9, **characterised in that** a stabilising member (20) is provided in a region of the frame members (14, 15) of lateral bars (7, 8) of the machine which is adjacent the central bar (6) of the machine.

11. Haymaking machine according to one of claims 1 to 10, **characterised in that** the frame member (16) which is associated with the central bar (6) of the machine takes the form of a fixed frame member having locking members which are associated with the frame members (14, 15) of the lateral bars (7, 8) of the machine.

12. Haymaking machine according to one of claims 1 to 11, **characterised in that** lateral bars (7, 8) of the machine and associated frame members (14, 15) are jointed at points which are in line with one another and which have approximately horizontally aligned axes of pivot (9, 10).

13. Haymaking machine according to one of claims 1 to 12, **characterised in that**, when the lateral bars (7, 8) of the machine are in the position for transport, a central protective frame (21) is provided which fits over the front working rotors (12) in the working direction of travel and which, when the frame members (14, 15) of the lateral bars (7, 8) are in the position for transport, extends to a point close to these latter.

## Revendications

1. Machine de fenaison (1), notamment pour étaler et retourner des végétaux à tiges comportant des rotors (12) montés sur des flèches (7, 8) de la machine et s'appuyant sur le sol par des roues de sustentation (13) ainsi que des parties de cadre (14, 15) installées en amont des flèches (7, 8) selon la direction de travail (1.4), et les flèches (7, 8) prévues latéralement à côté d'une poutre centrale (6) de la machine, peuvent passer avec les parties de cadre (14, 15) qui leur sont associées, d'une position de travail située sensiblement transversalement à la direction de déplacement de travail (1.4) à une position de transport, basculée, sensiblement parallèle à la direction de déplacement de travail (1.4),
**caractérisée en ce que**
les parties de cadre (14, 15) des flèches latérales (7, 8) de la machine mise en position de travail avec une partie de cadre (16) associée à la poutre centrale de la machine ou une zone de partie de cadre des parties de cadre (14, 15), sont réalisées sous la forme d'un élément continu de barre de traction avec au moins un point de coupure (17, 18).

2. Machine de fenaison selon la revendication 1,
**caractérisée en ce que**
l'élément de barre de traction traversant les parties de cadre (14, 15) des flèches latérales (7, 8) et la partie de cadre (16) de la poutre centrale (6), comportent deux points de coupure (17, 18) situés de part et d'autre de cette poutre centrale (6).

3. Machine de fenaison selon la revendication 1 ou 2, comportant des parties de cadre (14, 15) soutenues par des traverses (14.2, 15.2) sur les flèches (7, 8),
**caractérisée en ce qu'**
une ou plusieurs paires de traverses (14.2, 15.2) voisines sont reliées par des éléments de stabilisation (20).

4. Machine de fenaison selon la revendication 3,
**caractérisée en ce qu'**
un élément de stabilisation (20) est réalisé comme appui en diagonale.

5. Machine de fenaison selon la revendication 3,
**caractérisée en ce qu'**
un élément de stabilisation (20) est formé par des appuis croisés.

6. Machine de fenaison selon la revendication 3,
**caractérisée en ce qu'**
un élément de stabilisation (20) est constitué par un élément en forme de plaque.

7. Machine de fenaison selon l'une des revendications 3 à 5, **caractérisée en ce qu'**
un élément de stabilisation (20) est réalisé sous la forme d'un élément en acier susceptible d'être soudé.

8. Machine de fenaison selon l'une des revendications 3 à 5, **caractérisée en ce qu'**
un élément de stabilisation (20) est formé par un câble d'acier.

9. Machine de fenaison selon l'une des revendications 1 à 8, **caractérisée en ce qu'**
un élément de stabilisation (20) est prévu à chaque extrémité d'une flèche latérale (7, 8).

10. Machine de fenaison selon l'une des revendications 3 à 9, **caractérisée en ce qu'**
un élément de stabilisation (20) est prévu dans une zone des parties de cadre (14, 15) tournées vers la poutre centrale (6), ces parties de cadre appartenant à une flèche (7, 8).

11. Machine de fenaison selon l'une des revendications 1 à 10,
**caractérisée en ce que**
la partie de cadre (16) associée à la poutre centrale (6) est réalisée comme partie de cadre fixe avec les parties de cadre (14, 15) avec des éléments de verrouillage associés aux parties de cadre (14, 15) des flèches latérales (7, 8).

12. Machine de fenaison selon les revendications 1 à 11,
**caractérisée en ce que**
les flèches latérales (7, 8) et les parties de cadre (14, 15) associées, ont des points d'articulation alignés avec des axes de pivotement (9, 10) dirigés sensiblement horizontalement.

13. Machine de fenaison selon les revendications 1 à 12,
**caractérisée en ce que**
dans la position de transport des flèches latérales (7, 8), il est prévu un cadre de protection (21) central, chevauchant les rotors (12) avant, dans la direction de déplacement de travail, ce cadre de protection s'étendant dans la position de transport des parties de cadre (14, 15) des flèches latérales (7, 8) jusqu'à proximité de celles-ci.
